# EUROPÄISCHE PATENTSCHRIFT

(11) **EP 0 470 356 B1**
(45) Veröffentlichungstag und Bekanntmachung des Hinweises auf die Patenterteilung: **12.01.1994**
(21) Anmeldenummer: 91110597.1
(22) Anmeldetag: 26.06.1991
(51) Int. Cl.: A01F 15/07, A01F 15/18

(54) **Erntegutpresse**
Press for harvested materials
Presse pour des produits récoltés

(30) Priorität: 10.08.1990 DE 4025467
(43) Veröffentlichungstag der Anmeldung: 12.02.1992
(73) Patentinhaber: Greenland Geldrop B.V., NL-5660 AA Geldrop (NL)
(72) Erfinder: van den Wildenberg, Leonardus Johannes, NL-6021 CT Budel (NL)
(74) Vertreter: Grünecker, Kinkeldey, Stockmair & Schwanhäusser Anwaltssozietät

(56) Entgegenhaltungen:
- EP-A- 0 364 042
- CH-A- 413 477
- DE-C- 3 811 649
- FR-A- 1 315 200
- US-A- 3 713 283

## Beschreibung

Die Erfindung betrifft eine Rundballenpresse der im Oberbegriff des Patentanspruchs 1 angegebenen Art.

In einer aus EP-A1-03 64 042 bekannten Rundballenpresse ist im Preßraum eine Startwalze vorgesehen, die den Aufbau des Rundballenkerns unterstützt und das Erntegut von der Zuführstrecke aus dem Einlaß zum Preßraum übernimmt. Die Startwalze liegt horizontal im Boden der Preßkammer. Sie besitzt einen zylindrischen, glatten Walzengrundkörper und wird drehangetrieben.

Bei Erntegut verarbeitenden Maschinen anderer Art (einer Kolbenpresse zur Herstellung quaderförmiger Erntegutblöcke gemäß FR-A-13 15 200; einem Häcksler gemäß US-A-37 13 283; einem Feldhäcksler gemäß CH-A-41 34 77 und einer Ballenpresse gemäß DE-C1-38 11 649) ist innerhalb einer Zuführstrecke von einer Aufnahmevorrichtung zu einem Arbeitsraum für das Erntegut außerhalb des Arbeitsraums eine horizontal liegende Transportwalze angeordnet, die an ihrem Grundkörper Querförderelemente und in einem mittleren Bereich Vorwärtsförderelemente trägt. Die Transportwalze führt das breit ankommende Erntegut zusammen und fördert es vorwärts. Es gibt keine Hinweise, sie zusätzlich zu ihrer Transportfunktion mit einer Arbeitsfunktion in einem Arbeitsraum zu betrauen.

Der Erfindung liegt die Aufgabe zugrunde, eine Rundballenpresse der eingangs genannten Art zu schaffen, bei der eine zügige und staufreie Förderung des Ernteguts in den Preßraum, ein rascher Aufbau eines Rundballenkerns und eine kurze Zuführstrecke zum Preßraum erreichbar sind.

Die gestellte Aufgabe wird mit den im kennzeichnenden Teil des Patentanspruchs 1 angegebenen Merkmalen gelöst.

Bei dieser Ausbildung hat die Walze eine Doppelfunktion, weil sie für die zügige und staufreie Förderung des Ernteguts in den Preßraum und im Preßraum für den raschen Aufbau eines Kerns für einen neuen Rundballen verantwortlich ist. Sie ersetzt die Startwalze im Preßraum und beseitigt die Staugefahr in diesem kritischen Bereich. Ferner läßt sich eine wünschenswert kurze Zuführstrecke für das Erntegut schaffen, was der Baulänge der Erntegutpresse zugute kommt. Die Walze übt im Preßraum drei Funktionen aus. Zunächst führt sie den breiten Erntegutstrom auf eine Breite zusammen, in der dieser im Preßraum zum Rundballen verarbeitet werden kann. Ferner fördert sie den zusammengeführten Erntegutstrom zügig und staufrei in den sich aufbauenden Rundballen. Schließlich unterstützt sie als Startwalze den Aufbau des Rundballenkerns. Dabei stützt sie das Erntegut gegen ein Zurückfallen in die Zuführstrecke oder zum Einlaß. Wegen der Form ihrer Vorwärtsförderelemente übt die Walze keine zerstörende Wirkung auf den Rundballen aus. Die Vorwärtsförderelemente tragen eher zur Verdichtung bei und sind bei ihrer Einwirkung auf den sich aufbauenden Rundballen durch das Erntegut sozusagen abgepolstert.

Das gleiche Ziel kann auf einfache Weise durch die abdeckenden Querfördergehäuse gemäß Anspruch 2 erreicht werden.

Eine einfache und zuverlässige Ausführungsform geht ferner aus Anspruch 3 hervor.

Um die Förderwirkung der Vorwärtselemente auf die jeweiligen Gegebenheiten besser abstimmen zu können, auch im Hinblick auf das Einwirken auf den Rundballenkern, sind die Merkmale gemäß Anspruch 4 vorteilhaft.

Im Hinblick auf einen hohen Gleichförmigkeitsgrad im Rundballen kann es zweckmäßig sein, gemäß Anspruch 5 die radiale Höhe der Vorwärtsförderelemente in axialer Richtung variabel zu wählen.

Bei der Ausführungsform gemäß Anspruch 6 wird von vorneherein dafür Sorge getragen, daß in den Randbereichen des vorwärtsgeförderten Strangs keine zu hohe Erntegutdichte entsteht.

Die Ausführungsform gemäß Anspruch 7 ist vorteilhaft, weil bei oberschlächtiger Förderung der Erntegutstrang zügig in den Rundballen eingearbeitet wird. Die Drehrichtung des Rundballens im Preßraum wird zweckmäßigerweise so gewählt, daß sich sein Umfang in der Richtung dreht, in der sich auch die Vorwärtsförderelemente bewegen. Eine schädliche Wirkung der Vorwärtsförderelemente für den Rundballen ist wegen deren Ausbildung als Stege oder Rippen nicht zu befürchten. Im übrigen werden die Stege oder Rippen durch das Erntegut so weit abgedeckt, daß ihr mechanischer Einfluß auf den Rundballen vernachlässigbar bleibt.

Anhand der Zeichnung werden Ausführungsformen des Erfindungsgegenstandes erläutert. Es zeigen:
- Fig. 1: einen schematischen Längsschnitt durch den Unterteil einer Rundballenpresse, und
- Fig. 2: eine Draufsicht auf Details der Rundballenpresse von Fig. 1.

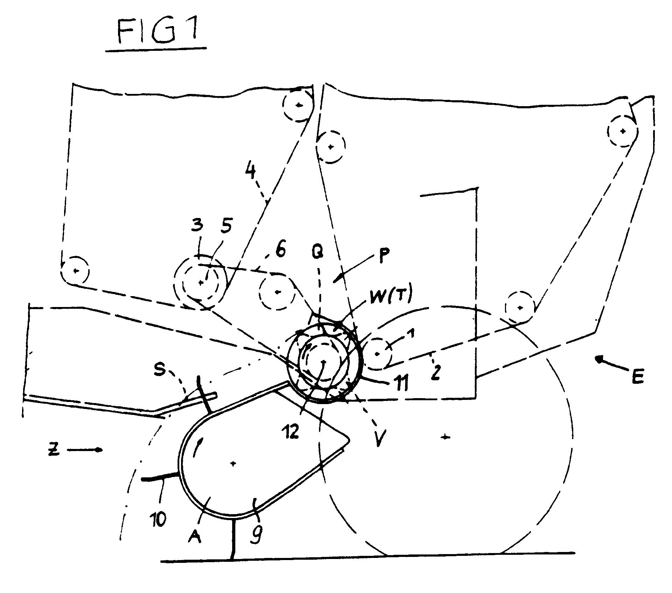

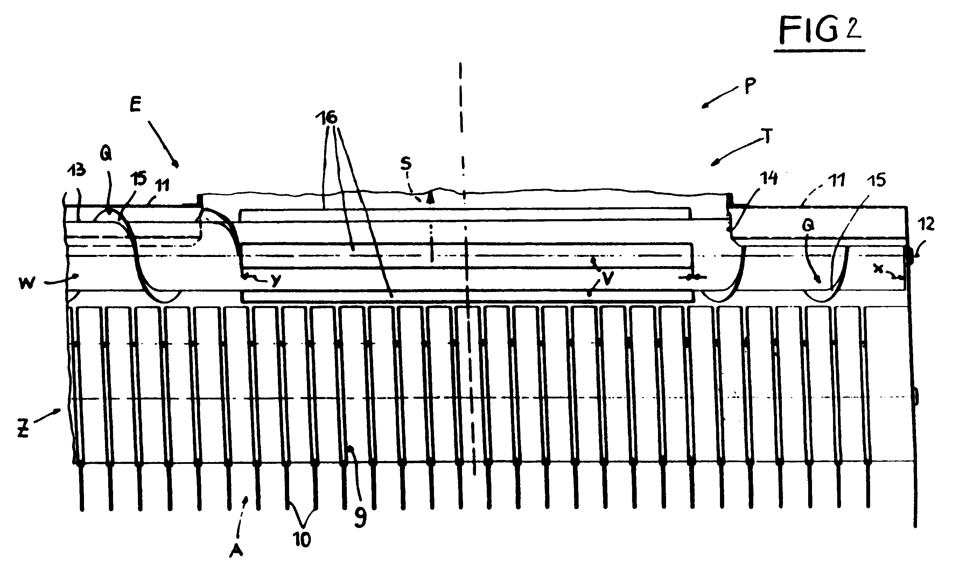

Eine Rundballenpresse E gemäß den Fig. 1 und 2 besitzt eine Zuführvorrichtung Z mit einer Pick-up-Trommel A, die das Erntegut vom Boden aufnimmt und entlang einer Zuführstrecke S in einen Preßraum P fördert. Im Preßraum P ist eine Walze W angeordnet, die sowohl zum Querzusammenführen des von der breiteren Pick-up-Trommel A aufgenommenen Ernteguts als auch zum Vorwärtsfördern dient. Die Walze W besitzt in ihren Endbereichen X als Schneckenkämme 15 ausgebildete Querförderelemente Q und in einem von den Querförderelementen Q begrenzten Mittelbereich Y Vorwärtsförderelemente V. Die Walze W dient als Startwalze T zum Aufbauen eines Wickelkerns für den Rundballen.

Die Rundballenpresse E enthält erste und zweite Gruppen von Umlenkrollen 1, 3 für Preßelemente 2, 4. Die förderebandartige Preßelemente 2 und 4 sind gegensinnig bewegbar und begrenzen den variablen Preßraum P. Eine Umlenkrolle 5 für das Preßelement 4 dient als Antrieb für die Startwalze T, die damit über eine Antriebskette oder einen Antriebsriemen 6 gekuppelt ist. Die Pick-up-Trommel A besitzt ein Antriebselement 9 für gesteuerte Zinken 10. Die Walze W ist an ihren Endbereichen durch schalenförmige Querfördergehäuse 11 zum Preßraum P nach unten abgedeckt. Die Gehäuse 11 erstrecken sich bis zu einem Einlaß 14 zum Preßraum P hin. Die Walze W besitzt einen Walzengrundkörper 13, auf dem die Schneckenkämme 15 und die Vorwärtsförderelemente V befestigt sind.

Die Schneckenkämme 15 sind gegenläufig angeordnet, so daß bei einer Drehrichtung der Walze W in Fig. 1 im Uhrzeigersinn das Erntegut zur Mitte hin zusammengeführt wird, ehe es von den Vorwärtsförderelementen in den Preßraum gedrückt wird. Die Walze W wird zweckmäßigerweise mit einer relativ hohen Drehzahl angetrieben, die auf die Umlaufgeschwindigkeit der Zinken 10 abgestimmt ist.

Die Vorwärtsförderelemente V sind axial gerade durchgehende, im Querschnitt annähernd dreieckige Rippen 16 oder Stege auf dem Walzengrundkörper 13. Es könnten auch reihenweise angeordnete Einzelvorsprünge vorgesehen sein. Ferner ist es denkbar, die Vorwärtsförderelemente als Borstenreihen oder als elastische Profile auszubilden, die steif genug sind, das Erntegut formschlüssig wirksam zu fördern, bei harten Gegenständen jedoch nachgeben.

Im vorliegenden Ausführungsbeispiel ist erkennbar, daß der axiale Bereich Y der Vorwärtsförderelemente v kürzer ist als die Breite des Einlasses 14 zum Preßraum. Die Schneckenkämme 15 schließen praktisch übergangslos mit den Vorwärtsförderelementen V ab. Es ist aber auch denkbar, hier eine geringfügige Überlappung vorzusehen. Die Walze W kann auch nur in einem Endbereich X mit Querförderelementen Q und in dem anderen Bereich ihrer lange die Vorwärtsförderelemente V tragen. Für kleinere Pressen würde es nämlich reichen, nur von einer Seite her das Erntegut zu den Vorwärtsförderelementen zu bringen.

Die radiale Höhe der Vorwärtsförderelemente V kann gleich der radialen Höhe der Schneckenkämme 15 sein. Es ist aber auch denkbar, die radiale Höhe der Vorwärtsförderelemente V größer oder kleiner als die radiale Höhe der Schneckenkämme 15 auszubilden oder die Vorwärtsförderelemente über ihre axiale Länge mit variierender radialer Höhe anzuordnen.

Mit anderen Worten ist die Startwalze T als Zuführwalze W mit Vorwärtsförderelementen V in einem Mittelbereich und mit Querförderelementen in seitlich außerhalb des Einlasses 14 zum Preßraum P liegenden Bereichen ausgebildet, wobei die Bereiche der Querförderelemente Q durch Querfördergehäuse 11 abgedeckt sind.

Es läßt sich mit der Walze W eine bewußte Steuerung der Dichteverteilung im in den Preßraum geförderten Strang dadurch erzielen, daß das Erntegut in der Zuführstrecke von der Aufnahmevorrichtung zur Starterwalze nicht sich selbst überlassen, sondern zügig vorwärtsgefördert wird. Das seitlich durch die Querförderelemente in den vorwärtsgeförderten Strang gebrachte Erntegut kann zum stärkeren Verdichten der Randbereiche des Stranges genutzt werden, um sozusagen einen optimalen Dichteverlauf über die Breite des Stranges einzustellen. Ferner läßt sich trotz des seitlich und mittig zugeführten Ernteguts durch entsprechende Auslegung der Walze W die Dichteverteilung über die Strangbreite vergleichmäßigen. Schließlich ist es aber auch möglich, die Randbereiche des Stranges weniger dicht zu machen als den Mittelbereich des Stranges. Die Zuführwalze bildet eine Regeleinrichtung zwischen der Aufnahmevorrichtung und der Startzone im Preßraum, die eine vorherbestimmbare Steuerung des Aufbaus eines optimalen Rundballens ermöglicht.

## Patentansprüche

1. Rundballenpresse (E) für Erntegut, mit einem größenvariablen Preßraum (P) mit einer dem preßraum (P) vorgesetzten Aufnahmevorrichtung (A), die den Preßraum (P) über eine Zuführstrecke und einen Einlaß (14) mit dem Erntegut beschickt, und mit einer im Preßraum (P) horizontal angeordneten, zur Drehung antreibbaren, einen Walzengrundkörper (13) aufweisenden Startwalze (T) zum Aufbauen eines Rundballenkerns im Preßraum (P), **dadurch** **gekennzeichnet**, daß die Startwalze (T) in einem Mittelbereich (Y) ihres Walzengrundkörpers (13) mehrere axial verlaufende, als Rippen (16) oder Stege ausgebildeten Vorwärtsförderelemente (V) aufweist, und daß am Walzengrundkörper (13) in zumindest einem an den Mittelbereich (Y) angrenzenden Endbereich (X) seitlich außerhalb des Bereiches des Einlasses (14) zum Preßraum (P) liegende Querförderelemente (Q) zum Querzusammenführen des Ernteguts vorgesehen sind.

2. Rundballenpresse nach Anspruch 1, **dadurch** **gekennzeichnet**, daß die Querförderelemente (Q) gegenüber dem Preßraum (P) durch Querfördergehäuse (11) abgedeckt sind.

3. Rundballenpresse nach Anspruch 1, **dadurch** **gekennzeichnet,** daß die Vorwärtsförderelemente (V) die gleiche radiale Höhe haben wie die Querförderelemente (Q).

4. Rundballenpresse nach Anspruch 1, **dadurch** **gekennzeichnet,** daß die Vorwärtsförderelemente (V) eine von der radialen Höhe der Querförderelemente (Q) abweichende radiale Höhe besitzen.

5. Rundballenpresse nach Anspruch 1, **dadurch** **gekennzeichnet,** daß die radiale Höhe der Vorwärtsförderelemente (V) in axialer Richtung variiert.

6. Rundballenpresse nach Anspruch 1, **dadurch** **gekennzeichnet,** daß die axiale Länge des Mittelbereiches (Y) mit den Vorwärtsförderelementen (V) höchstens in etwas der Breite des Einlasses (14) entspricht.

7. Rundballenpresse nach Anspruch 1, **dadurch** **gekennzeichnet,** daß die Walze als oberschlächtig vorwärtsfördernde Startwalze antreibbar ist.

## Claims

1. Roll bale press (E) for harvested material, including a pressing chamber (P) of variable size, a pick-up means (A), which is situated upstream of the pressing chamber (P) and charges the pressing chamber (P) with the harvested material via a feed path and an inlet (14), and a starting roller (T), which is disposed horizontally in the pressing chamber (P), is rotatably drivable and has a basic roller base member (13), for the construction of a rolled bale core in the pressing chamber (P), characterised in that the starting roller (T) has, in a central region (Y) of its basic roller base member (13), a plurality of axially extending forwardly conveying members (V), which are in the form of ribs (16) or cross-piece members, and in that transversely conveying members (Q), which are situated on the basic roller base member (13) in at least one end region (X), abutting against the central region (Y), laterally externally of the region of the inlet (14) extending to the pressing chamber (P), are provided to bring the harvested material together transversely.

2. Roll bale press according to claim 1, characterised in that the transversely conveying members (Q) are covered by transverse conveyor housings (11) relative to the pressing chamber (P)

3. Roll bale press according to claim 1, characterised in that the forwardly conveying members (V) have the same radial height as the transversely conveying members (Q).

4. Roll bale press according to claim 1, characterised in that the forwardly conveying members (V) have a radial height which differs from the radial height of the transversely conveying members (Q).

5. Roll bale press according to claim 1, characterised in that the radial height of the forwardly conveying members (V) varies in the axial direction.

6. Roll bale press according to claim 1, characterised in that the maximum axial length of the central region (Y) having the forwardly conveying members (V) corresponds substantially to the width of the inlet (14).

7. Roll bale press according to claim 1, characterised in that the roller is drivable as an overshot forwardly conveying starting roller.

## Revendications

1. Presse à ballots ronds (E) destinée à des produits récoltés, disposant d'une zone de pressage (P) de dimension variable, d'un dispositif de réception (A) qui est placé avant la zone de pressage (P) et qui alimente en produits récoltés la zone de pressage (P) en passant par une voie d'amenage et une entrée (14) et d'un cylindre de démarrage (T) disposé à l'horizontale dans la zone de pressage (P), pouvant être actionné selon un mouvement rotatif, présentant un corps de cylindre (13) et permettant de constituer un noyau de ballot rond dans la zone de pressage (P), caractérisée par le fait que le cylindre de départ (T) présente dans une partie centrale (Y) de son corps de base (13) plusieurs éléments permettant la propulsion en avant (V) situés axialement, conçus sous forme de nervures (16) ou d'ailettes et par le fait que sur le corps du cylindre (13) à au moins l'une des extrémités (X) adjacentes à la partie centrale (Y), des éléments de transport transversal (Q) situés sur les côtés à l'extérieur de l'accès (14) à la zone de pressage (P) sont prévus pour ramasser au niveau transversal les produits récoltés.

2. Presse à ballots ronds selon la revendication 1, caractérisée par le fait que les éléments de transport transversal (Q) sont recouverts par des enveloppes servant au transport transversal (11) faisant face à la zone de pressage (P).

3. Presse à ballots ronds selon la revendication 1, caractérisée par le fait que les éléments permettant la propulsion en avant (V) ont une hauteur radiale identique à celle des éléments de transport transversal (Q).

4. Presse à ballots ronds selon la revendication 1, caractérisée par le fait que les éléments permettant la propulsion en avant (V) présentent une hauteur radiale différente de la hauteur radiale des éléments permettant le transport transversal (Q).

5. Presse à ballots ronds selon la revendication 1, caractérisée par le fait que la hauteur radiale des éléments permettant la propulsion en avant (V) varie au niveau axial.

6. Presse à ballots ronds selon la revendication 1, caractérisée par le fait que la longueur axiale de la partie centrale (Y) portant les éléments permettant la propulsion en avant correspond approximativement à la largeur de l'entrée (14) tout au plus.

7. Presse à ballots ronds selon la revendication 1, caractérisée par le fait que le cylindre peut être actionné comme cylindre de démarrage permettant la propulsion en avant.
